# DEMANDE DE BREVET EUROPEEN

(11) **EP 0 575 253 A1**
(43) Date de publication de la demande: **22.12.1993**
(21) Numéro de dépôt: 93401548.8
(22) Date de dépôt: 16.06.1993
(51) Int. Cl.: G01S 7/298

(54) **Dispositif de conversion des informations de sortie d'un radar pour leur visualisation sur un écran de télévision**

(30) Priorité: 18.06.1992 FR 9207423
(71) Demandeur: SOPELEM-SOFRETEC, Société dite:, F-95870 Bezons (FR)
(72) Inventeur: Giraudy, Bernard Charles, F-95150 Taverny (FR)
(74) Mandataire: Barnay, André François

(57) **Abrégé**

Ce dispositif de conversion des informations pour leur visualisation sur au moins un écran de télévision associé à une mémoire vidéographique, les signaux de sortie du radar comprenant au moins un signal vidéographique et des données de balayage, est caractérisé en ce qu'il comporte des moyens (1) de conditionnement des différentes informations de sortie du radar, des moyens (2) de numérisation du signal vidéographique, des moyens (3) de compression du signal vidéographique numérisé, des moyens (4) de génération de marqueurs de distance, des moyens (5) de conversion du standard des coordonnées des informations contenues dans le signal d'un système de coordonnées polaires en un système de coordonnées cartésiennes, une mémoire intermédiaire (6) recevant le signal vidéographique compressé et les marqueurs de distance, une mémoire tampon de sortie (8) recevant les signaux de sortie de la mémoire intermédiaire (6) et des moyens de conversion de standard (5), et des moyens de pilotage (9) de la mémoire en fonction des informations contenues dans la mémoire tampon.

## Description

La présente invention concerne un dispositif de conversion des informations de sortie d'un radar pour leur visualisation sur au moins un écran de télévision.

Plus particulièrement, ce dispositif est utilisé pour visualiser des informations sur un écran de télévision associé à au moins une mémoire vidéographique.

De façon plus générale, le dispositif de conversion proposé permet de visualiser sur un écran de télévision standard à balayage en X, Y, c'est-à-dire en coordonnées cartésiennes, des images issues d'un capteur fonctionnant en ρ, ϑ, c'est-à-dire en coordonnées polaires.

Ce capteur est généralement une antenne radar associée à son électronique de commande et dans l'état de la technique, les consoles utilisées pour la visualisation de ces images radar reçoivent directement les différentes informations et en particulier le signal vidéographique de sortie de ce radar.

Cependant, ces consoles sont relativement rudimentaires et la qualité de l'image visualisée n'est pas très bonne.

Par ailleurs, les possibilités d'extension de l'utilisation en particulier de l'imagerie radar, sont également relativement limitées du fait de la structure de ces consoles, et en particulier de l'écran de visualisation et de son électronique de commande.

On connait également par les documents 7th DIGITAL AVIONICS SYSTEMS CONFERENCE, 16 Octobre 1986, FORT WORTH, et US-A-4 392 137, des procédés et des dispositifs de traitement des signaux de sortie d'un radar pour l'affichage d'images relatives à ceux-ci.

Cependant, les procédés et les dispositifs décrits dans ces documents, présentent des performances relativement limitées dans la mesure où ils nécessitent la sélection et/ou l'extraction dans les signaux issus du radar, d'informations utiles concernant les cibles puis le traitement de celles-ci par un processeur, pour reconstituer une position géométrique relative des cibles sur l'écran.

Le but de l'invention est donc de résoudre ces problèmes en permettant la visualisation de ces images sur un écran de télévision tout en respectant l'ergonomie des consoles classiques et en conservant la qualité de l'imagerie liée à la rémanence des phosphores utilisés dans ces consoles classiques.

A cet effet, l'invention a pour bojet un dispositif de conversion des informations de sortie d'un radar pour leur visualisation sur au moins un écran de télévision associé à une mémoire vidéographique, les signaux de sortie du radar comprenant au moins un signal vidéographique et des données de balayage, caractérisé en ce qu'il comporte des moyens de conditionnement des différentes informations de sortie du radar, des moyens de numérisation du signal vidéographique, des moyens de compression du signal vidéographique numérisé, des moyens de génération de marqueurs de distance, des moyens de conversion du standard des coordonnées des informations contenues dans le signal vidéographique d'un système de coordonnées polaires en un système de coordonnées cartésiennes, une mémoire intermédiaire recevant le signal vidéographique compressé et les marqueurs de distance, une mémoire tampon de sortie recevant les signaux de sortie de la mémoire intermédiaire et des moyens de conversion de standard, et des moyens de pilotages de la mémoire vidéographique en fonction des informations contenues dans la mémoire tampon.

L'invention sera mieux comprise à l'aide de la description qui va suivre, donnée uniquement à titre d'exemple et faite en se référant aux dessins annexés, sur lesquels :
- La figure 1 représente un schéma synoptique illustrant le fonctionnement d'un dispositif de conversion selon l'invention.
- La figure 2 est un tableau des adresses VME utilisées par le dispositif de conversion selon l'invention.
- La figure 3 représente un schéma synoptique illustrant le fonctionnement d'un processeur de rémanence entrant dans la constitution d'un dispositif selon l'invention.
- La figure 4 représente un écran d'un moniteur sur lequel deux images radar sont affichées simultanément.

Le dispositif de conversion selon l'invention est destiné à être utilisé pour convertir des informations de sortie d'un radar et permettre leur visualisation sur au moins un écran de télévision associé à une mémoire vidéographique.

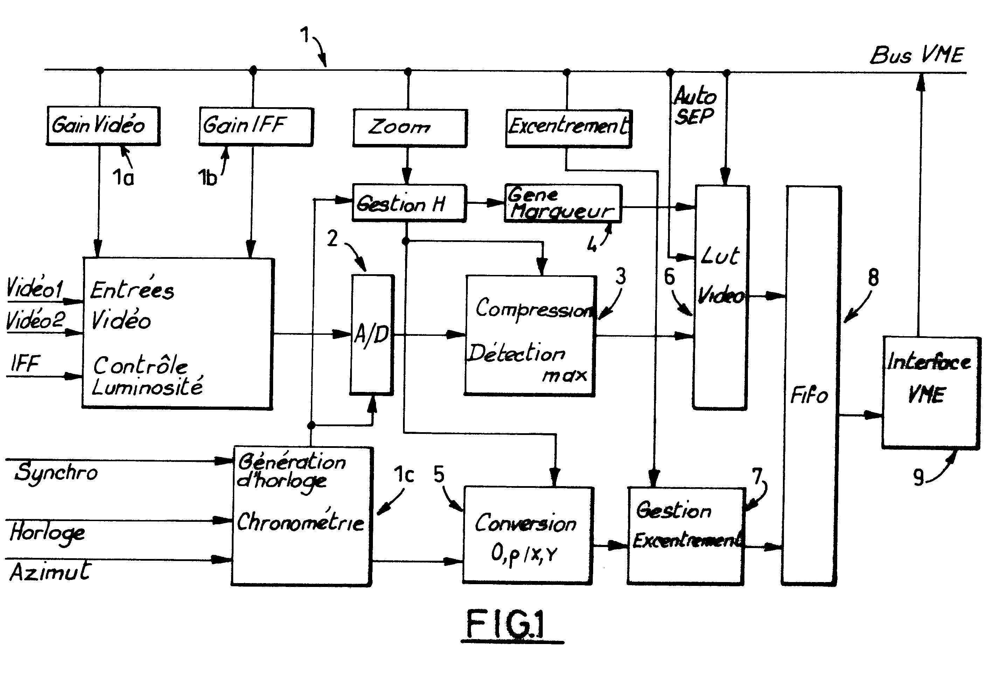

Comme on peut le voir sur la figure 1, les différentes informations de sortie du radar comprenant en outre au moins un signal vidéographique et des données de balayage, sont appliquées à l'entrée de moyens de conditionnement.

Ces moyens sont désignés par la référence générale 1 sur cette figure, et forment ce que l'on appelle une interface radar comprenant différents circuits analogiques et numériques effectuant un prétraitement des signaux radar afin de les rendre exploitables par le reste des circuits de ce dispositif.

En général, ces signaux comprennent au moins :
- deux entrées vidéographiques, (primaire et secondaire),
- une entrée IFF,
- une entrée synchro,
- une entrée azimut série.

Les signaux vidéographiques primaire et secondaire passent par une chaîne d'amplification afin de présenter une amplitude correcte à l'entrée de moyens de conversion analogique/numérique 2 qui seront décrits plus en détail par la suite.

Le gain des signaux vidéographiques est contrôlé numériquement par l'intermédiaire d'un multiplieur analogique/numérique 1a préservant la bande passante et dont la valeur du gain est fixée par un registre.

Les deux signaux vidéographiques sont multiplexés et le choix du signal vidéographique à traiter s'effectue sous le contrôle d'une unité de gestion qui sera décrite plus en détail par la suite.

Le signal IFF, après amplification réglable par des moyens de contrôle 1b, est mélangé au signal vidéographique sélectionné avant numérisation et sa présentation est soumise au choix de l'opérateur par sélection à l'aide de l'unité de gestion.

Enfin, le signal d'azimut et son horloge associée sont remis en forme dans des récepteurs différentiels avant d'attaquer un registre à décalage, ces moyens étant désignés de façon générale par la référence 1c.

En sortie de ceux-ci, on dispose du signal d'azimut sous forme parallèle et celui-ci sert, comme cela sera décrit plus en détail par la suite, à des moyens de conversion du standard des coordonnées des informations contenues dans le signal vidéographique.

Après passage dans les moyens de conditionnement 1 décrits précédemment, le signal vidéographique est appliqué à l'entrée des moyens de numérisation 2. A ce niveau, l'échantillonnage s'effectue à fréquence fixe, de sorte que l'on peut traiter des impulsions correspondant à la largeur d'impulsion minimale des radars dont les signaux sont à visualiser.

A titre d'exemple, une horloge de 10 MHz est utilisée et autorise la numérisation d'impulsions d'une largeur de 200 ns.

Ces moyens de numérisation 2 sont associés à des moyens 3 de compression du signal vidéographique pour numériser uniquement ce qui est visualisable sur l'écran afin de réduire la quantité de données à traiter.

Ainsi, lorsque le nombre d'échantillons le long d'une radiale d'image est supérieur à la définition possible de la visualisation, les informations radar sont regroupées, c'est-à-dire que l'on prend le niveau maximum d'amplitude du signal vidéographique parmi N échantillons.

A titre d'exemple, pour une échelle donnée et une fréquence de 10 MHz, on a 2048 échantillons le long de chaque radiale radar. On effectue alors un regroupement d'ordre 2 en ne prenant que l'amplitude maximale parmi deux échantillons successifs.

Pour ce faire, on est amené à réaliser une horloge à fréquence variable en fonction du type de radar et de l'échelle choisis.

Cette horloge est modifiée par l'intermédiaire de l'unité de gestion.

Une détection d'amplitude maximale des N échantillons est effectuée en temps réel en sortie des moyens de conversion analogique/numérique par les moyens de compression 3.

De plus, l'horloge variable est également utilisée par des moyens 4 de génération de marqueurs de distance.

Il en résulte une concordance parfaite entre ces marqueurs et le signal vidéographique numérisé.

Le signal vidéographique numérisé et les marqueurs sont ensuite utilisés pour adresser une mémoire intermédiaire statique rapide qui sera décrite plus en détail par la suite et qui permet, suivant son contenu, de contrôler un certain nombre d'éléments de la visualisation et par exemple la luminosité de certains marqueurs, le réglage du niveau zéro du signal vidéographique pour autoriser une suppression de bruit, etc...

Il est à noter qu'une table de correction des amplitudes du signal vidéographique radar pourrait également être écrite afin de modifier la fonction de transfert de la chaîne de numérisation (réponse logarithmique, etc...).

Le dispositif de conversion comporte également des moyens classiques 5 de conversion du standard des coordonnées des informations contenues dans le signal vidéographique d'un système de coordonnées polaires en un système de coordonnées cartésiennes.

Ceci permet d'effectuer directement des écritures d'échantillons dans l'espace physique de la mémoire vidéographique.

Ces différentes opérations de conversion s'effectuent en temps réel et sont rythmées par l'horloge variable, seules les coordonnées des points sélectionnés précédemment étant calculées.

En sortie, ces différentes coordonnées sont modifiées en fonction de l'emplacement du radar par rapport à l'unité de visualisation, etc... afin d'obtenir des coordonnées appartenant à l'espace physique de la mémoire vidéographique.

La mémoire intermédiaire recevant les signaux de sortie des moyens de génération des marqueurs 4 et des moyens de compression 3, est désignée par la référence générale 6 sur cette figure, tandis que les moyens de gestion d'excentrement sont désignés par la référence générale 7.

Le dispositif de conversion comporte également une mémoire tampon de sortie désignée par la référence générale 8, recevant les signaux de sortie de la mémoire intermédiaire 6 et des moyens de conversion de standard 5 à travers des moyens de gestion d'excentrement 7.

Cette mémoire tampon de sortie 8 peut être constituée par des mémoires du type premier entré, premier sorti (FIFO) permettant des accès asynchrones et à fréquence variable entre le dispositif de conversion et l'unité de gestion.

On dispose en entrée de cette mémoire, de l'abscisse et de l'ordonnée des points d'une radiale radar ainsi que l'amplitude du signal vidéographique associé.

Cet ensemble d'informations forme un mot de 32 bits qui est relu par l'unité de gestion formée par exemple par tout organe approprié, tel qu'un automate d'écriture dans la mémoire vidéographique suivant l'option choisie.

Afin de limiter le nombre de transferts à effectuer, seuls les points d'amplitude différente de 0 sont écrits dans cette mémoire tampon de sortie 8 et on notera que le nombre de points écrits dépend largement du réglage du seuil de suppression du bruit de fond du signal vidéographique.

On notera que ce dispositif de conversion peut être utilisé dans une station de travail standard dans laquelle les visualisations peuvent utiliser les grandes normes informatiques du type VME, UNIX, X-WINDOWS, GKS, etc...

Dans ce cas, la sortie de la mémoire tampon de sortie 8 est reliée par exemple à une interface de type VME 9, permettant de transmettre les différents ordres de contrôle aux différents circuits du dispositif de conversion et de gérer la visualisation des images par pilotage de la mémoire vidéographique.

Aucun traitement n'est alors effectué lors de la conversion par le calculateur hôte, ce qui permet un travail en temps réel vrai.

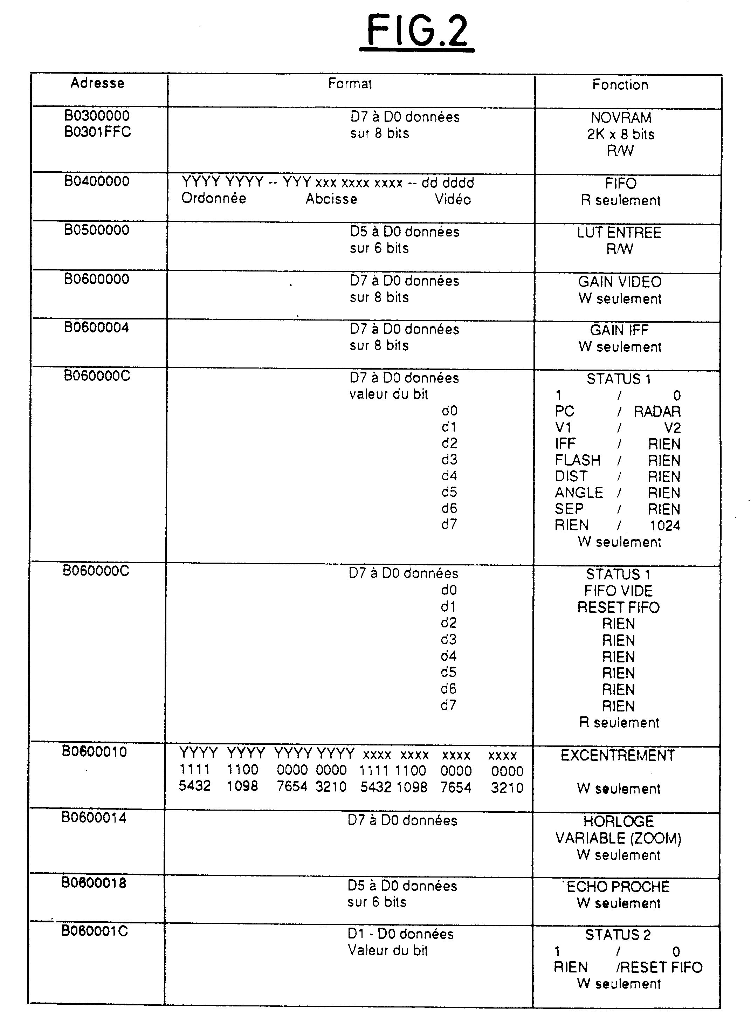

Différentes adresses d'entrée-sortie ont été réservées dans l'espace adressable étendu par exemple d'un Unigraph, comme on peut le voir en particulier sur la figure 2.
- Adresses NOVRAM.
   Une mémoire non volatile de 2K de 8bits permet au dispositif de conversion de sauvegarder les paramètres courants de visualisation. A la mise sous tension, il s'initialise à l'aide des paramètres qu'il avait stockés avant sa mise hors tension. Cette mémoire est accessible par le calculateur hôte en lecture et en écriture.
- Adresse FIFO.
   Provoque la lecture mot par mot des informations adresses/données calculées par le dispositif de conversion.
- Adresse mémoire intermédiaire
   Permet de modifier le contenu de cette mémoire (luminosité marqueurs, SEP, flash de cap...)
- Adresse gain vidéo
   Permet de régler la luminosité de la vidéo réelle; 256 valeurs sont possibles.
- Adresse gain IFF
   Même fonction que le gain vidéo.
- Adresse registre d'état 1 (status 1)
   Accessible en écriture, ce registre permet de modifier les vidéos visualisées.
   En lecture ce registre constitue l'état du FIFO.
- Adresse excentrement
   Registre contenant les coordonnées système du centre radar.
- Adresse Zoom
   Registre contenant la valeur de l'échelle sélectionnée pour la visualisation.
- Adresse SEP
   Registre contenant le rayon de la zone de suppression d'écho proche modulo 8 pixels écran; 64 valeurs sont disponibles.
- Adresse registre d'état 2 (status 2) écriture
   Registre de serviture permettant entre autre, d'activer la remise à zéro des pointeurs de la FIFO.

Un mélange d'informations réelles-synthétiques peut également être effectué au niveau d'une carte graphique VMCG2a, grâce aux informations calculées par le dispositif de conversion et stockées temporairement dans la mémoire tampon de sortie 8.

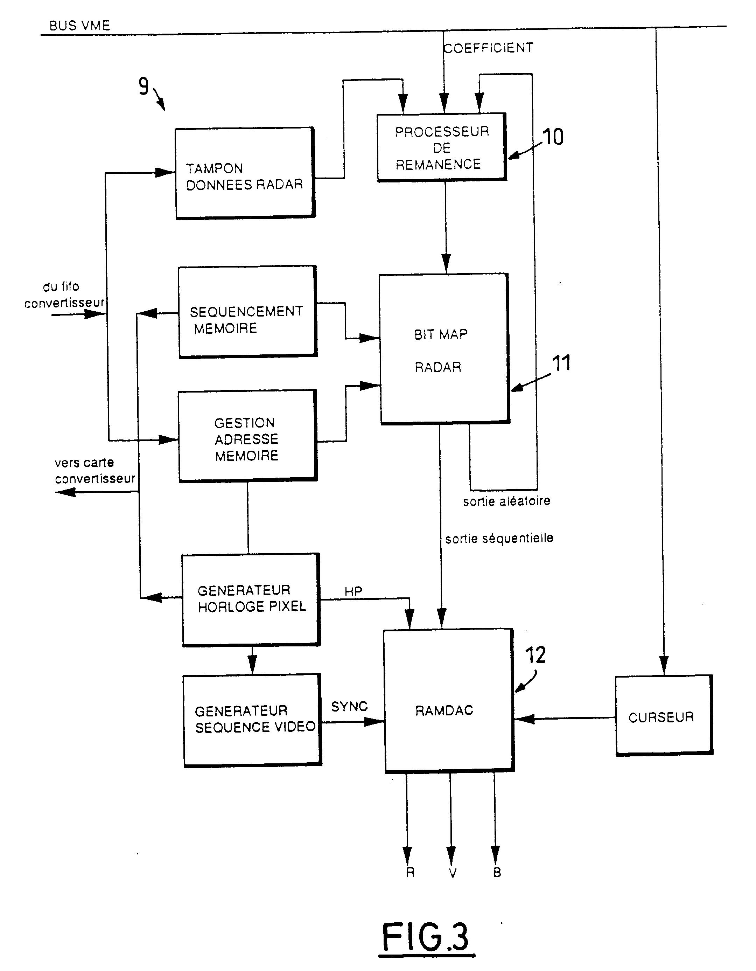

Ainsi qu'on peut le voir sur la figure 3, une visualisation directe peut également être prévue.

En effet, le principe d'écriture des informations radar dans la carte graphique de l'Unigraph via le bus VME imposant des limitations de la définition et de la vitesse de balayage du radar, une option visualisation directe peut également être utilisée.

Elle permet entre autre l'affichage des informations radar en utilisant 6 bits, à savoir 64 niveaux, permettant d'apprécier la différence de rendu dans la présentation de l'image, et un processeur de rémanence désigné par la référence 10 sur cette figure 3 est relié à la mémoire vidéographique 11 pour autoriser une visualisation proche de celle obtenue sur un écran cavalier traditionnel.

Comme on peut le voir également sur cette figure, le générateur d'adresses séquentielles, c'est-à-dire d'adresses de visualisation des lignes TV, est réalisé à partir de la séquence de sortie vidéographique. Celle-ci dépendant de la définition, l'utilisation de circuits programmables est donc nécessaire.

La fréquence de base de l'horloge point est par exemple de 120 MHz pour un format de 1280 x 1024 pixels.

Le tableau ci-dessous donne les différents temps de la séquence vidéographique.

| SIGNAL | 1280 x 1024 |
|---|---|
| Fréquence verticale | 60 Hz |
| Durée Blanking trame | 656,8 µs |
| Durée de ligne | 15,64 µs |
| Durée Blanking ligne | 4,97 µs |
| Durée utile de la ligne | 10,67 µs |

La séquence engendrant les adresses de visualisation et la séquence vidéographique, synchronise également l'écriture des informations radar avec la séquence vidéographique, en engendrant les signaux nécessaires à la relecture de la mémoire tampon de sortie 8.

Ce séquenceur engendre tous les signaux nécessaires à la gestion de la mémoire vidéographique 11 et au partage du bus mémoire pour les trois types d'accès à cette mémoire.

Ces trois accès sont :
- Accès séquentiel, c'est-à-dire le chargement dans les registres à décalage de sortie, du contenu des lignes vidéographiques afin de les transmettre au convertisseur numérique/analogique de sortie.
- Accès radar, c'est-à-dire la génération du signal de lecture de la mémoire tampon 8 et la gestion de l'écriture conditionnelle dans la mémoire vidéographique. En effet, il ne faut pas réécrire systématiquement la donnée radar car il peut arriver que l'on écrase l'information d'un plot radar par du bruit. Lors de cet accès, on n'écrit donc la donnée que si cette dernière est supérieure à celle présente à l'adresse considérée.
- Accès processeur de rémanence, c'est-à-dire la génération des signaux de contrôle nécessaires au processeur de rémanence.

La mémoire vidéographique 11 permet de stocker de façon aléatoire les informations radar qui seront relues séquentiellement pour être visualisées.

Les composants utilisés pour réaliser cette mémoire peuvent être constitués par des mémoires RAM vidéographiques d'une capacité de 256 k de 4 bits comprenant un registre à décalage en sortie, ce qui permet de charger dans le registre, les informations d'une ligne vidéographique en un cycle RAM. Le reste du temps, la mémoire est disponible pour l'écriture du signal vidéographique radar par le processeur de rémanence.

Afin d'éviter l'utilisation d'une horloge de décalage trop rapide, la mémoire est découpée sous forme parallèle en huit pages rythmées par une horloge de 120 MHz divisée par 8, c'est-à-dire de 15 MHz.

On dispose alors en sortie de cette mémoire de 8 pixels toutes les 67 ns, la mise en série de ces points étant assurée par l'étage de sortie vidéographique.

La remise à zéro de la mémoire vidéographique est nécessaire à la présentation à chaque tour de la situation réelle. Ceci ajouté à l'utilité ergonomique de la rémanence des phosphores utilisés en balayage cavalier classique, a conduit à la réalisation d'une pseudo-rémanence de visualisation des informations.

L'observation des phénomènes visuels dus à l'asynchronisme des deux types de balayage, à savoir radar et télévision, ainsi que la physiologie de l'oeil humain, a permis la mise au point d'un algorithme simple et performant, permettant un excellent rendu de l'effet de rémanence.

Bien entendu, le fait que cet effet soit obtenu de façon numérique au niveau de la mémoire vidéographique autorise des lois de décroissance quelconque de la luminosité tant sur le plan spatial que temporrel, pour aller jusqu'à une rémanence infinie très utile pour effectuer le tracé de l'historique des trajectoires des échos mobiles.

Le meilleur rendu de l'effet de rémanence est obtenu avec 6 bits d'informations à visualiser.

Ce processeur de rémanence 10 effectue alors un traitement du contenu de certaines zones de la mémoire vidéographique, selon une loi déterminée, pour engendrer un phénomène de pseudo-rémanence de certains points de l'image radar visualisée sur l'écran.

L'étage de sortie analogique désigné par la référence générale 12 sur cette figure 3, est destiné à convertir en analogique le contenu de la mémoire vidéographique et à engendrer les signaux vidéographiques R, V, B et synchro TV pour piloter le moniteur.

Cet étage permet en outre de définir la palette de pseudo-couleurs souhaitée. A un niveau vidéographique donné correspond une valeur choisie parmi 16,8 millions de possibilités.

On dispose donc en sortie de 64 couleurs avec 6 bits radar (16 couleurs avec 4 bits radar), parmi les 16,8 millions possibles. Cette palette de pseudo-couleurs est chargée via le bus VME.

Cet étage gère également trois curseurs différents dont deux sont entièrement définissables dans une matrice de 64 x 64, le dernier étant une croix. La couleur de ces curseurs est également programmable.

La mémoire vidéographique étant divisée en 8 pages parallèles, les moyens analogiques de l'étage de sortie mettent sous format série les 8 points pour visualiser un point vidéographique en pseudo-couleurs toutes les 8,3 ns en format 1280 x 1024.

Le signal vidéographique de sortie est disponible sous forme analogique avec comme amplitude 0,7 V pour les sorties R et B et 0,7 plus 0,3 V de synchronisation sur la sortie V, permettant la synchronisation du moniteur.

Toutes les programmations de cet étage de sortie, compte tenu des mémoires de couleurs, de formes et de positions de curseurs sont faites via le bus VME.

Ce dispositif de conversion d'informations radar est en fait réalisé sous la forme d'un module de deux cartes au format double Europe long, s'intégrant dans le panier à cartes d'un Unigraph. Ce dispositif respecte l'interface VME.

Le dispositif de conversion de base ne nécessite qu'une seule carte pour la réalisation de la configuration initiale, cette carte recevant ses commandes par l'intermédiaire du bus VME et émettant les informations en coordonnées cartésiennes après calcul.

Cette carte utilise des composants de type VLSI en technologie CMOS, la plupart de ceux-ci étant reconfigurables par PROM extérieure, d'où la modification aisée du standard de visualisation par exemple.

Elle peut être réalisée en technologie câblée.

L'ensemble de visualisation directe se présente quant à lui sous la forme d'une carte fille pouvant être connectée au dispositif de conversion de base.

Elle regroupe toutes les mémoires, le séquenceur, le processeur de rémanence, l'horloge pixel, etc.

Du fait des fréquences de travail élevées, elle est réalisée sur une carte à circuit imprimé comportant par exemple six couches.

On conçoit donc que le dispositif de conversion selon l'invention permet la visualisation d'une image radar complète sur un moniteur à balayage en X, Y par exemple à haute définition.

L'invention permet également l'affichage simultané de plusieurs images radar, complètes ou partielles, sur un même moniteur, les radars étant disposés à distance les uns des autres.

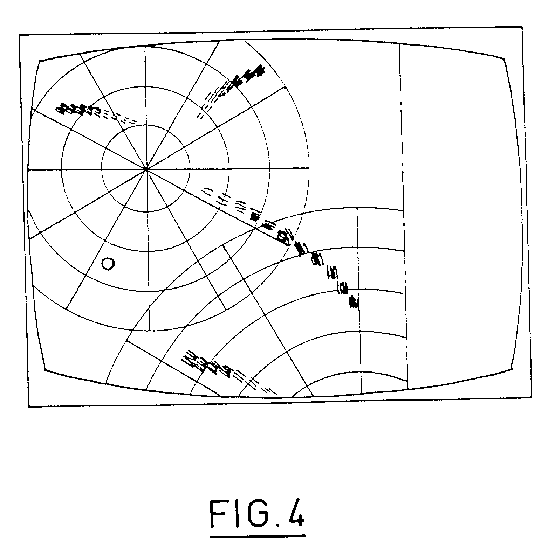

La figure 4 donne un exemple de l'affichage simultané de deux images radar qui permet par exemple de suivre, sans discontinuité, la trajectoire d'un aéronef, ou d'un missile, qui vole successivement dans le champ des deux radars.

Il est possible d'envisager l'affichage simultané de quatre images radar, et ceci à l'aide d'une seule mémoire vidéographique.

Toutes les fonctionnalités d'une console classique peuvent être réalisées. Ceci permet une étude ergonomique aisée de nouvelles fonctions qui sont possibles avec l'utilisation d'une station graphique et d'une mémoire vidéographique radar, en particulier, au niveau des lois de rémanence et de l'utilisation de couleurs.

## Revendications

1. Dispositif de conversion des informations de sortie d'un radar pour leur visualisation sur au moins un écran d'un moniteur de télévision associé à une mémoire vidéographique (11), les signaux de sortie du radar comprenant au moins un signal vidéographique et des données de balayage, caractérisé en ce qu'il comporte des moyens (1) de conditionnement des différentes informations de sortie du radar, des moyens (2) de numérisation des signaux vidéographiques, des moyens (3) de compression du signal vidéographique numérisé, des moyens (4) de génération de marqueurs de distance, des moyens (5) de conversion du standard des coordonnées des informations contenues dans le signal vidéographique d'un système de coordonnées polaires en un système de coordonnées cartésiennes, une mémoire intermédiaire (6) recevant le signal vidéographique compressé et les marqueurs de distance, une mémoire tampon de sortie (8) recevant les signaux de sortie de la mémoire intermédiaire (6) et des moyens de conversion de standard (5), et des moyens de pilotage (9) de la mémoire vidéographique en fonction des informations contenues dans la mémoire tampon.

2. Dispositif selon la revendication 1, caractérisé en ce que les moyens de pilotage comprennent un processeur de rémanence (10) de traitement du contenu de certaines zones de la mémoire vidéographique (11) selon une loi déterminée, pour engendrer un phénomène de pseudo-rémanence de certains points de l'image radar visualisée sur l'écran.
